(19) **Europäisches Patentamt / European Patent Office / Office européen des brevets**

(11) **EP 1 643 227 B1**

(12) **EUROPÄISCHE PATENTSCHRIFT**

(45) Veröffentlichungstag und Bekanntmachung des Hinweises auf die Patenterteilung:
**11.07.2012 Patentblatt 2012/28**

(51) Int Cl.:
***G01J 5/50*** (2006.01)

(21) Anmeldenummer: **05017900.1**

(22) Anmeldetag: **17.08.2005**

(54) **Beleuchtungseinrichtung und Verfahren zur Regelung**

Illumination device and regulation method

Dispositif d'éclairage et procédé de régulation

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.09.2004 DE 102004047669**

(43) Veröffentlichungstag der Anmeldung:
**05.04.2006 Patentblatt 2006/14**

(73) Patentinhaber: **Patent-Treuhand-Gesellschaft für elektrische Glühlampen mbH 81543 München (DE)**

(72) Erfinder:
• **Plötz, Ludwig 93473 Arnschwang (DE)**

• **Biebl, Alois 93358 Train - St. Johann (DE)**
• **Philipp, Andre 71672 Marbach (DE)**

(74) Vertreter: **Epping - Hermann - Fischer Patentanwaltsgesellschaft mbH Ridlerstrasse 55 80339 München (DE)**

(56) Entgegenhaltungen:
**EP-A1- 1 194 013     WO-A-02/47438
WO-A-02/090909     US-A- 6 127 783
US-B1- 02 722 631**

**Beschreibung**

Die Erfindung betrifft ein Verfahren zur Regelung einer Beleuchtungseinrichtung.

Beleuchtungseinrichtungen, wie beispielsweise Hinterleuchtungen von Displays oder Leuchtmittel für Leuchten, beinhalten zur Erzeugung von mischfarbigem Licht in der Regel primäre Lichtquellen unterschiedlicher Farben, deren Licht additiv gemischt wird.

Unterliegen die Helligkeiten der primären Lichtquellen Schwankungen aufgrund äußerer Einflüsse wie zum Beispiel Temperaturänderungen oder Alterungsprozessen, verschiebt sich der Farbort des mischfarbiges Lichtes ungewollt. Um den Farbort von mischfarbiges Licht konstant zu halten, wurden rückgekoppelte Regelsysteme vorgeschlagen, die die Helligkeiten der unterschiedlichen Farbkanäle mit Hilfe von Farbsensoren messen und den daraus resultierenden Farbort bestimmen und regeln.

Farbsensoren sind Bauteile, die elektromagnetische Strahlung eines begrenzten Wellenlängenbereichs detektieren können. Sie können beispielsweise eine Fotodiode beinhalten, die mit einem Farbfilter versehen ist, so dass diese nur Licht eines bestimmten Spektralbereiches detektiert.

Beschreibungen von Farbsensoren, sowie Anwendungsbeispiele für Kalibrierungssysteme und rückgekoppelte Regelsysteme für Displays, die Farbsensoren verwenden, sind beispielsweise zu finden unter www.mazet.de/doc1/app99112.pdf,

www.mazet.de/doc1/app03121.pdf,

www.mazet.de/doc1/app99114.pdf und

www.taosinc.com/downloads/pdf/tcs230wp.pdf.

Farbsensoren besitzen jedoch eine Reihe von Nachteilen, die zu Ungenauigkeiten in den Helligkeitsmessungen führen und die Komplexität des Regelsystems erhöhen können. So sind kommerziell nur Farbsensoren mit bestimmten Detektionsbereichen erhältlich. Daher ist der Detektionsbereich selten genau auf das Spektrum der primären Lichtquellen abgestimmt. Außerdem verlaufen die Grenzen des Detektionsbereiches meist stetig und nicht scharf begrenzt.

In der Druckschrift WO 02/47438 A2 ist ein LED-Beleuchtungssystem angegeben.

Ein System zur Messung von Farbkoordinaten ist in der Druckschrift WO 02/090909 A2 offenbart.

Die Druckschrift US 6,127,783 A betrifft eine LED-Leuchte mit elektronisch justierter Farbbalance.

Die Druckschriften US 6,320,325 B1 und EP 1 194 013 A1 betreffen LED-Displays.

Aufgabe der vorliegenden Erfindung ist es, ein einfaches Regelverfahren für eine Beleuchtungseinrichtung anzugeben.

Diese Aufgabe wird durch ein Verfahren gemäß Patentanspruch 1 gelöst.

Vorteilhafte Ausführungsformen des Verfahrens zur Regelung sind in den Unteransprüchen 2 bis 8 angegeben.

Eine Beleuchtungseinrichtung, die im Betrieb mischfarbiges Licht aussendet, das Licht mindestens zweier verschiedener Farbkanäle enthält, umfasst insbesondere:

- mindestens eine erste primäre Lichtquelle einer ersten Farbe, deren Licht einen ersten Farbkanal bildet,
- mindestens eine zweite primäre Lichtquelle einer zweiten Farbe, deren Licht einen zweiten Farbkanal bildet,
- mindestens eine Sensoreinrichtung, die so positioniert ist, dass mindestens ein einziger Lichtsensor der Sensoreinrichtung mischfarbiges Licht empfangen kann und der geeignet ist, Helligkeit von Licht eines kontinuierlichen Wellenlängenbereiches zu detektieren, der die Farbkanäle umfasst und die im Betrieb die Helligkeiten der verschiedenen Farbkanäle separat und wiederholend ermittelt, und
- eine Auswerte- und Regeleinrichtung, die im Betrieb die Helligkeitswerte der Farbkanäle auswertet und die pulsweitenmodulierte elektrische Signale mit derart modifizierter Grundperiode zur Ansteuerung der einzelnen Farbkanäle ermittelt, dass der Farbort des mischfarbigen Lichtes innerhalb eines vorgegeben Bereiches der CIE-Normfarbtafel liegt.

Da der Detektionsbereich eines einzigen Lichtsensors der Sensoreinrichtung kontinuierlich ist und die Wellenlängenbereiche der Farbkanäle beinhaltet, können primäre Lichtquellen beliebiger Wellenlänge verwendet werden. Bevorzugt enthält die Sensoreinrichtung keine Farbfilter. So werden Ungenauigkeiten in der Farbortbestimmung weitestgehend vermieden, wie sie bei der Verwendung von Farbsensoren auftreten können.

Um mit einer solchen Sensoreinrichtung die Helligkeiten der unterschiedlichen Farbkanäle separat ermitteln zu können, werden die Farbkanäle mit modifizierten pulsweitenmodulierten elektrischen Signalen angesteuert.

Bei einem pulsweitenmodulierten Signal, wie es der Fachmann kennt, handelt es sich um ein Signal, vorzugsweise um ein Rechtecksignal, das innerhalb einer festen Grundperiode für eine bestimmte Zeit $t_{ein}$ angeschaltet und für die restliche Dauer der Grundperiode $t_{aus}$ ausgeschaltet ist. Das Verhältnis aus Einschaltzeit und Grundperiode $t_{ein}/(t_{ein}+t_{aus})$ bezeichnet man als Tastverhältnis. Es gibt den prozentualen zeitlichen Anteil an, über den das Rechtecksignal innerhalb der Grundperiode angeschaltet ist.

Gemäß der vorliegenden Erfindung wird die Grundperiode modifiziert, um Startwerte für ein Verfahren zur Regelung des Farbortes zu ermitteln.

Der Farbort des mischfarbigen Licht wird im wesentlichen durch das Prinzip der additiven Farbmischung bestimmt. Er kann durch Variation der Helligkeiten der einzelnen Farben verändert und eingestellt werden. Wird die Helligkeit einer Farbe erhöht, steigt ihr Anteil an der Mischfarbe des Lichtes und der Farbort des mischfarbige Lichtes wird in Richtung der Farbe geschoben, dessen Helligkeit erhöht wurde.

Die CIE-Normfarbtafel, die von der internationalen Beleuchtungskommission festgelegt wurde, ist eine Darstellung aller Farborte, die aus Spektralfarben additiv gemischt werden können. Sie ist dem Fachmann bekannt und wird von daher an dieser Stelle nicht näher erläutert.

In einer bevorzugten Ausführungsform beinhaltet die Beleuchtungseinrichtung mindestens eine rote, eine grüne und eine blaue primäre Lichtquelle, aus deren Licht jeweils die Farbkanäle Rot, Grün und Blau gebildet werden.

Mit den drei Grundfarben Rot, Grün und Blau, den sogenannten Primärvalenzen, wird innerhalb der CIE-Normfarbtafel ein Dreieck aufgespannt, das einen großen Bereich der CIE-Normfarbtafel abdeckt. Alle Farbvalenzen innerhalb dieses Dreiecks und damit ein großer Bereich der CIE-Normfarbtafel, können durch additives Mischen der Grundfarben Rot, Grün und Blau erzeugt werden. Der Farbort einer Beleuchtungseinrichtung mit den drei Farbkanälen Rot, Grün und Blau kann daher durch Variation der Helligkeiten der Farbanteile beliebig innerhalb des Farbdreiecks eingestellt werden.

Bei einer bevorzugten Ausführungsform der Beleuchtungseinrichtung liegt der angestrebte Bereich des Farbortes des mischfarbigen Lichtes im weißen Bereich. Zum einen ist weißes Licht, insbesondere Licht, das dem Sonnenlicht ähnelt, für viele Anwendungen erforderlich. Zum anderen ist das menschliche Auge besonders sensitiv auf Farbänderungen im Weißen, was besonders häufig eine Regelung des Farbortes erforderlich macht.

Weiterhin enthält die Beleuchtungseinrichtung bevorzugt mindestens sechs primäre Lichtquellen, deren Licht jeweils zwei rote, zwei grüne und zwei blaue Farbkanäle bilden, wobei die Sensoreinheit die Helligkeit der einzelnen Farbkanäle separat und wiederholend ermittelt und die Auswerte- und Regeleinheit jeweils pulsweitenmodulierte Signale für jeden Farbkanal separat ermittelt. Die doppelte Anzahl an Farbkanälen erlaubt eine genauere Regelung des Farbortes des mischfarbigen Lichtes. Weiterhin ist das Regelverfahren weniger von äußeren Einflüssen, wie beispielsweise Licht aus anderen Quellen abhängig.

Bevorzugt beinhaltet die Beleuchtungseinrichtung als primäre Lichtquellen organische Leuchtdioden (OLED), Laser, Elektrolumineszenzfolien oder insbesondere Leuchtdioden (kurz "LED") auf Basis von Halbleitermaterialien.

Diese primären Lichtquellen besitzen den Vorteil, dass im Gegensatz zu z.B. Glühlampen, ihre Helligkeit ohne große Zeitverzögerung durch Variation des elektrisches Signals geändert werden kann. Sie eignen sich daher für die Ansteuerung mit modifizierten pulsweitenmodulierten Signalen zur Einstellung ihrer Helligkeit.

In einer weiteren bevorzugten Ausführungsform beinhaltet die Auswerte- und Regeleinrichtung der Beleuchtungseinrichtung einen Mikrokontroller. Sie kann ebenso einen anwendungsspezifizierten integrierten Schaltkreis (ASIC), einen Prozessor (CPU), einen Analogrechner oder einen PC beinhalten.

Ein Mikrokontroller bietet insbesondere den Vorteil, klein zu sein und ein kompakte Bauweise der Auswerte- und Regeleinrichtung zu ermöglichen. Weiterhin zeichnet sich ein Mikrokontroller durch geringe Leistungsaufnahme und daher durch geringe Wärmeentwicklung aus.

Die Sensoreinrichtung der Beleuchtungseinrichtung beinhaltet bevorzugt eine Fotodiode. Sie kann auch einen Fotowiderstand, einen Charged-Coupled-Device Chip (CCD-Chip) oder einen Fototransistor beinhalten.

Fotodioden sind besonders zur Detektion geeignet, da sie in vielfachen Ausführungen zur Verfügung stehen, günstig und unempfindlich gegenüber Alterung sind, sowie ein schnelles Ansprechverhalten besitzen.

Die Beleuchtungseinrichtung kann bevorzugt zur Hinterleuchtung von Displays, insbesondere von LCD-Displays verwendet werden. Diese sind dem Fachmann bekannt und werden daher an dieser Stelle nicht näher erläutert.

LCD-Displays bieten eine Reihe von Vorteilen, wie beispielsweise eine geringe Bauteildicke und hohe Auflösung. Aufgrund ihrer Funktionsweise erzeugen LCD-Displays jedoch nicht selber Licht, sondern benötigen immer eine Hinterleuchtung.

Das LCD-Display kann auch eine aktive Matrix zur Ansteuerung der Pixel beinhalten (TFT-Display). Im Unterschied zu herkömmlichen LCD-Displays mit passiver Matrix, bei denen die LCD-Zellen mit Hilfe einer matrixförmigen Anordnung von Zeilen- und Spaltenelektroden angesteuert werden, kann bei LCD-Displays mit aktiver Matrix jede einzelne Zelle mit einem Dünnfilmtransistor angesteuert werden. Dies bietet den Vorteil Flüssigkristalle verwenden zu können, die in sehr kurzer Zeit ihre Phase unter Anlegen einer Spannung ändern. Dies führt zu besserem Kontrast, größerer Flimmerfreiheit und kurzen Ansprechzeiten der Displays.

Weitere Anwendungsmöglichkeiten der Beleuchtungseinrichtung lassen sich beispielsweise bei Farbkopierern, Scannern und Projektionssystemen, wie Beamern, finden.

Ein Verfahren zur Regelung einer Beleuchtungseinrichtung, die mischfarbiges Licht aussendet, das Licht mindestens zweier verschiedener Farbkanäle enthält, bei dem jeder Farbkanal mit einem pulsweitenmodulierten elektrischen Signalen mit einer Abfolge von Grundperioden angesteuert wird, zeichnet sich dadurch aus, dass

- die Grundperioden eines pulsweitenmodulierten elektrischen Signals jeweils so modifiziert werden, dass die Grundperioden ein erstes Zeitintervall enthalten, während dem alle Farbkanäle gleichzeitig angeschaltet sind,
- die Grundperioden eines pulsweitenmodulierten elektrischen Signals jeweils so modifiziert sind, dass sie mindestens ein zweites Zeitintervall enthalten während dem nur einer der mindestens zwei Farbkanäle angeschaltet ist und jeweils die Helligkeit des angeschalteten Farbkanals separat ermittelt wird,
- die modifizierten Grundperioden (11) aufeinanderfolgen und eine Gesamtperiode bilden, die sich wiederholt, und
- nach Ablauf der Gesamtperiode (12) das Verhältnis der Helligkeiten der einzelnen Farbkanäle verglichen wird und die Tastverhältnisse der jeweiligen modifizierten pulsweitenmodulierten elektrischen Signale so eingestellt werden, dass der Farbort des mischfarbigen Lichtes innerhalb eines vorgegeben Bereiches der CIE-Normfarbtafel liegt.

Durch die Verwendung modifizierter pulsweitenmodulierter Signale können die Werte einfach ermittelt werden, die ein Regelalgorithmus als Startwerte braucht, um den Farbort einer Beleuchtungseinrichtung zu regeln, die mischfarbiges Licht aussendet, das sich aus unterschiedlichen Farbkanälen zusammensetzt und eine Sensoreinrichtung mit mindestens einem Lichtsensor beinhaltet, der Helligkeiten von Licht mit unterschiedlichen Farben innerhalb eines kontinuierlichen Wellenlängenbereiches ermitteln kann. Weiterhin ermöglicht dieses Verfahren eine Regelung des Farbortes der Beleuchtungseinrichtung während des Leuchtbetriebes bei gleichzeitig guter Helligkeit der Beleuchtungseinrichtung. Es wird kein besonderer Betriebsmodus, wie beispielsweise ein Testmodus benötigt, um den Farbort des mischfarbigen Lichtes der Beleuchtungseinrichtung in den vorgegeben Bereich zu bringen.

Zudem minimiert das einfache Regelprinzip den Aufwand der Programmierung und macht so beispielsweise eine Regelung durch einen Mikrokontroller möglich.

In der Regel hängen die Helligkeiten von Lichtquellen, die beim Betreiben mit Gleichstrom einen nichtlinearen Zusammenhang zwischen Helligkeit und Stromstärke aufweisen, linear vom Tastverhältnis von pulsweitenmodulierten Signalen ab. Die Helligkeit solcher Lichtquellen, wie beispielsweise Leuchtdioden, lassen sich aus diesem Grund meist einfacher regeln, wenn sie mit pulsweitenmodulierten Signalen betrieben werden.

Die Gesamtperiode der pulsweitenmodulierten elektrischen Signale enthält mindestens eine Grundperiode, die so modifiziert ist, das innerhalb eines Zeitintervalls der Grundperiode kein Farbkanal angeschaltet ist und innerhalb dieses Zeitintervalls die Hintergrundhelligkeit bestimmt wird. Nach der Bestimmung des Helligkeitswertes eines Farbkanals und der Messung der Hintergrundhelligkeit kann von dem Helligkeitswert eines Farbkanals der Wert der Hintergrundhelligkeit abgezogen und so korrigiert werden. Dies macht das Regelverfahren von Störeinflüssen aus der Umgebung, wie beispielsweise Licht aus anderer Quellen, weitestgehend unabhängig und trägt zur Stabilität des Regelverfahrens bei.

Bevorzugt werden innerhalb des Zeitintervalls einer Grundperiode zur Bestimmung der Helligkeit eines Farbkanals mehrere Messwerte der Helligkeit diese Farbkanals nacheinander aufgenommen und gemittelt.

Ebenso werden bevorzugt innerhalb des Zeitintervalls zur Bestimmung der Hintergrundhelligkeit mehrere Messwerte der Hintergrundhelligkeit aufgenommen und gemittelt.

Die Verwendung von Mittelwerten als Parameter für den Regelalgorithmus eliminiert vorteilhafterweise den Einfluss statistischer Fehler und trägt zur Stabilität des Regelverfahrens bei.

Weiterhin besitzen die Intervalle, während denen eine Messung der Hintergrundhelligkeit bzw. der Helligkeit eines Farbkanals durchgeführt wird, vorzugsweise die gleiche Länge, da dies das Regelverfahren vereinfacht.

Vorzugsweise sind die Zeitintervalle zur Messung der Helligkeit eines Farbkanals bzw. der Hintergrundhelligkeit kürzer als das Zeitintervall in dem der jeweilige Farbkanal leuchtet. Die Intervalle während denen Helligkeitsmessungen durchgeführt werden, verringern den Helligkeitseindruck, den ein Betrachter von der Beleuchtungseinrichtung vermittelt bekommt, so dass es vorteilhaft ist, diese Zeitintervalle möglichst kurz zu halten, um eine Beleuchtungseinrichtung mit möglichst großer Helligkeit zu erhalten.

Bevorzugt ist eine Gesamtperiode kürzer als 0,01 Sekunden. Dies führt zu Frequenzen der Hell-Dunkel-Abfolgen und der Farbwechsel hervorgerufen durch die Ansteuerung der Farbkanäle mit den pulsweitenmodulierten Signale größer als 100 Hz. Da das menschliche Auge normalerweise Hell-Dunkel - oder Farbwechsel mit Frequenzen über 100 Hz nicht mehr zeitlich auflösen kann, kann so ein weitestgehend flimmerfreies Bild erzeugt werden.

Weiterhin wechseln sich bevorzugt innerhalb der Gesamtperiode die Grundperioden, innerhalb denen die Helligkeit eines Farbkanals ermitteln wird, mit solchen ab, innerhalb denen die Helligkeitswerte des Hintergrundlichtes ermitteln wird.

Weitere Vorteile und vorteilhafte Ausführungsformen der Beleuchtungseinrichtung ergeben sich aus den im Folgenden in Verbindung mit den Figuren 1a und 1b, 2a, 2b und 2c, 3a und 3b, 4a und 4b, 5 und 6 näher erläuterten Ausführungsbeispielen.

Es zeigen:

Figuren 1a und 1b, schematische Darstellungen des Aufbaus einer Beleuchtungseinrichtung,

Figur 2a, schematische Darstellung eines virtuellen Farbkreises mit den Farben Rot (R), Violett (V), Blau (B), Zyan (C), Grün (G) und Gelb (Y), anhand dessen die Korrektur des Farbortes durchgeführt wird,

Figur 2b, Flussdiagramm der Rechenschritte des Algorithmus mit dem die Korrekturschritte der Regelung bestimmt werden,

Figur 2c, eine Tabelle, die die möglichen Korrekturschritte aus Figur 2b und ihre Umsetzung mit Hilfe einer Positivbeziehungsweise einer Negativregelung auflistet, wobei das Zeichen + in diesem Zusammenhang bedeutet, dass die Helligkeit des jeweiligen Farbkanals erhöht wird, das Zeichen 0, dass die Helligkeit gleich bleibt und das Zeichen -, dass sie herabgesetzt wird,

Figur 3a, schematische Darstellungen von modifizierten pulsweiten modulierten Signalen zur Ansteuerung eines roten (R), eines grünen (G) und eines blauen (B) Farbkanals,

Figur 3b, eine Tabelle mit den Schritten, die während der jeweiligen Grundperiode 11 aus Figur 3a durchgeführt werden,

Figur 4a, eine schematische Darstellung einer Beleuchtungseinrichtung mit zwei roten, zwei grünen und zwei blauen Farbkanälen,

Figur 4b, schematische Darstellung von modifizierten pulsweiten modulierten Signalen zur Steuerung von zwei roten (R1, R2), zwei grünen (G1, G2) und zwei blauen (B1, B2) Farbkanälen,

Figur 5, schematische Darstellung einer Aufsicht und eines Schnittes einer Beleuchtungseinrichtung mit mehreren Sensoreinrichtungen, die im mischfarbigen Lichtbereich der primären Lichtquellen angeordnet sind, und

Figur 6, Darstellung des Farbortes einer Beleuchtungseinrichtung auf der CIE-Normfarbtafel in Abhängigkeit der Zeit, wobei der Farbort mit Hilfe des Regelverfahrens jeweils ausgehend von drei Ist-Werten des Farbortes im farbigen Bereich zu einem Soll-Wert des Farbortes im weißen Bereich verschoben wird.

In den Ausführungsbeispielen und Figuren sind gleiche oder gleichwirkende Bestandteile jeweils mit den gleichen Bezugszeichen versehen. Die dargestellten Elemente der Figuren sind grundsätzlich nicht als maßstabsgerecht anzusehen. Vielmehr können sie zum besseren Verständnis teilweise übertrieben groß dargestellt sein.

Bei einer Beleuchtungseinrichtung können als primäre Lichtquellen 1 beispielsweise RGB-Leuchtdioden (kurz "RGB-LED") verwendet werden.

RGB-LEDs 1 sind Bauteile, bei denen sich drei LED-Halbleiterchips in einem Gehäuse befinden, von denen einer rotes, einer grünes und einer blaues Licht aussendet. Das verschiedenfarbige Licht, das beim Betrieb von den drei LED-Halbleiterchips emittiert wird, mischt sich additiv, so dass ein Betrachter mischfarbiges Licht wahrnimmt. Durch Variation der Helligkeit der einzelnen Farben können verschiedene Farborte des Lichtes, insbesondere im Weißen Bereich der CIE-Normtafel realisiert werden.

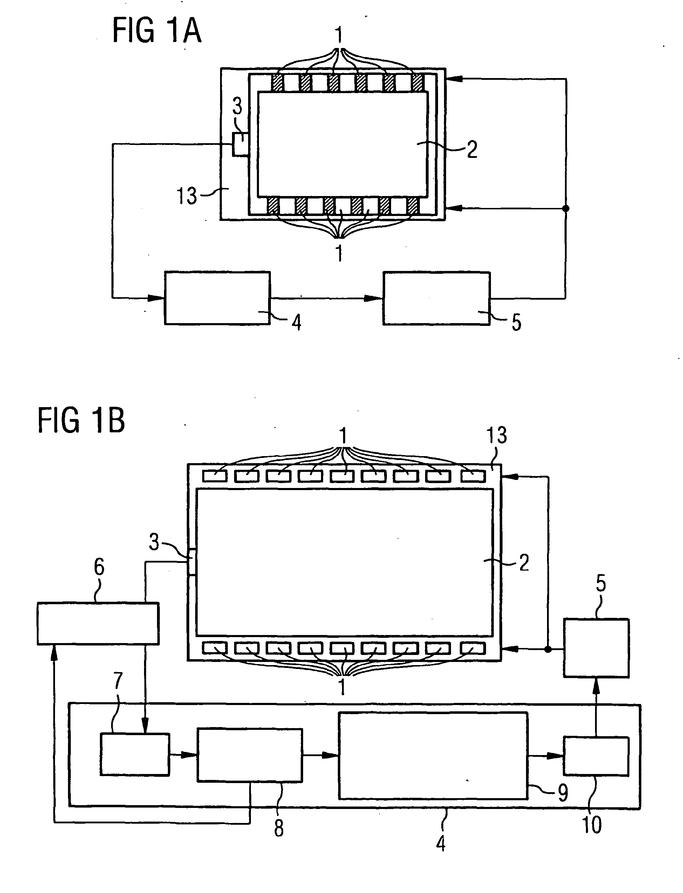

Die RGB-LEDs 1 sind auf einem Träger 13 in zwei Reihen angeordnet (vergleiche Fig. 1a), so dass sich ihr Licht mischt. Bei dem Ausführungsbeispiel gemäß Figur 1a koppeln die RGB-LEDs 1 in einen Lichtleiter 2 ein, so dass sich ihr Licht im Lichtleiter 2 mischt.

Das Licht der roten LED-Chips bildet zusammen einen roten R, das Licht der grünen LED-Chips einen grünen G und das Licht der blauen LED-Chips einen blauen B Farbkanal. Die LED-Chips werden mit pulsweitenmodulierten elektrischen Signalen angesteuert, da ihre Helligkeit linear vom Tastverhältnis abhängt und so die Helligkeitsregelung der Farbkanäle R, G, B vereinfacht werden kann.

Die Helligkeiten der einzelnen Farbkanäle R, G, B kann mit einer Sensoreinrichtung 3 ermitteln werden, die so angebracht ist, dass sie vom Licht der Farbkanäle R, G, B, erfasst wird, deren Helligkeitswerte sie bestimmen soll. Es kann sich bei der Sensoreinrichtung 3 beispielsweise um eine Fotodiode handeln, die seitlich des Lichtleiters 2 im angebracht ist.

Die Auswerte- und Regeleinrichtung 4, beispielsweise ein Mikrokontroller, bestimmt aus den Helligkeitswerten der Farbkanäle Rot R, Grün G und Blau B den Ist-Wert des Farbortes des mischfarbigen Lichtes und vergleicht den Ist-Wert mit dem Soll-Wert. Falls der Unterschied zwischen Ist-Wert und Soll-Wert außerhalb eines vorgegebenen Toleranzbereiches liegt, ermittelt und erzeugt die Auswerte- und Regeleinrichtung 4 neue Tastverhältnisse der pulsweitenmodulierten elektrischen Signale zur Ansteuerung der einzelnen Farbkanäle R, G, B und prägt diesem dem konstanten elektrischen Signal der Treibereinrichtung 5 auf. Als Mikrokontroller können handelsübliche Bausteine verwendet werden. Beispielsweise kann ein PIC Mikrokontroller PIC 18f242 verwendet werden.

Die Treibereinrichtung 5 ist bevorzugt eine konstante Stromquelle, der die pulsweitenmodulierten Signale der Auswerte- und Regeleinheit 4 aufgeprägt werden, so dass die LED-Halbleiterchips unterschiedlicher Farbe jeweils innerhalb eines Zeitintervalls entsprechend dem jeweiligen Tastverhältnis des jeweiligen pulsweitenmodulierten elektrischen Signals angeschaltet und in der restlichen Zeit ausgeschaltet ist. Die Treibereinrichtung 5 beinhaltet pro angesteuertem Farbkanal R, G, B einen Treiberbaustein. Als Treiberbaustein kann beispielsweise der IC-Baustein TLE 4242 von Infineon verwendet werden. Dieser Baustein hält das elektrische Signal konstant, indem überschüssige Energie in Verlustwärme umgewandelt wird.

Weiterhin kann die Treibereinrichtung 5 auch getaktete Treiberbausteine enthalten, die sich durch hohe Effizienz auszeichnen da sie überschüssige Energie nicht in Verlustwärme umwandeln. Das elektrische Signal eines getakteten Treiberbausteins ist mit einem hochfrequenten Signal überlagert und weist daher hochfrequente Schwingungen auf. Solche Treiberbausteine können ebenfalls verwendet werden, falls die hochfrequenten Schwingungen so klein sind, dass das Regelverfahren nicht davon beeinflusst wird.

In Figur 1b sind im Unterschied zu Figur 1a zusätzlich eine regelbare Verstärkungseinheit 6 sowie die Untereinheiten Analogdigitalwandler 7, Auswertung 8, Korrektur 9 und pulsweiten Modulationen 10 innerhalb der Auswerte- und Regeleinrichtung 4 symbolisch dargestellt, die die einzelnen Funktionen der Auswerte- und Regeleinrichtung 4 verdeutlichen sollen.

Die regelbare Verstärkungseinheit 6 hat die Aufgabe, das analoge elektrische Signal der Fotodiode 3 in ein Spannungssignal zu verwandeln und so zu verstärken, dass es vom Analogdigitalwandler 7 verarbeitet werden kann. Bei der regelbaren Verstärkungseinheit 6 kann es sich beispielsweise um einen invertierten Operationsverstärker (OPV) mit linearem Verhalten handeln. Ein OPV erzeugt im Wesentlichen ein verstärktes Signal der Differenz aus den Signalen, die an seinen beiden Eingängen anliegen. Da der OPV invertierend arbeitet, sinkt die Ausgangsspannung bei Beleuchtung der Fotodiode 3. Als OPV kann beispielsweise der MCP602 der Firma Microchip verwendet werden.

Das verstärkte analoge Signal der Fotodiode 3 wird vom Analogdigitalwandler 7 in ein digitales Signal umgewandelt und dann an die Auswerteeinheit 8 übermittelt. Die Auswerteinheit 8 ermittelt aus den Helligkeitswerten der Farbkanäle Rot R, Grün G und Blau B den Ist-Wert des Farbortes und vergleicht diesen mit dem vorgegebenen Soll-Wert. Falls der Unterschied zwischen Ist-Wert und Soll-Wert des Farbortes außerhalb eines vorgegebenen Toleranzbereiches liegt, ermittelt die Korrektureinheit 9 mit Hilfe eines vorgegebenen Korrekturschemas, welcher Farbkanal R, G, B heller oder dunkler werden muss. Anschließend erzeugt die Untereinheit pulsweiten Modulation 10 pulsweitenmodulierte Signale mit dem richtigen Tastverhältnis und prägt diese dem konstanten elektrischen Signal der Treibereinrichtung 5 auf, die die RGB-LEDs 1 mit dem so entstandenen Signal ansteuern.

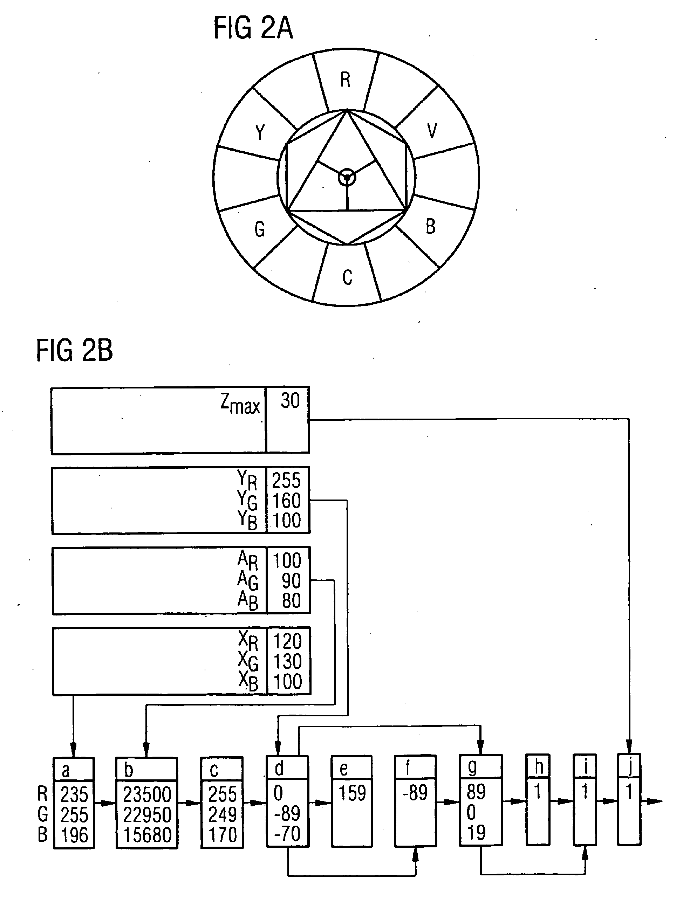

Anhand des virtuellen Farbkreises, der in Figur 2a dargestellt ist, wird im Folgenden das vorgegebene Korrekturschema erläutert, nach dem die Korrektureinheit 9 ermittelt, welcher Farbkanal R, G, B heller oder dunkler geregelt werden muss.

Der Farbkreis zeigt umlaufend die Farben Rot R, Violett V, Blau B, Zyan C, Grün G und Gelb Y. Rot R, Grün G und Blau B entsprechen den Farben der drei Farbkanäle R, G, B, die die die Eckpunkte des Farbraumes bilden. Zwischen zwei dieser sogenannten Primärvalenzen ist jeweils die Farbe dargestellt, die sich durch Mischen der beiden benachbarten Primärvalenzen ergibt.

Auf Grundlage des Verhältnisses der Helligkeiten der drei Farbkanäle Rot R, Grün G und Blau B zueinander entscheidet die Korrektureinheit, in welche "Farbrichtung" der nächste Korrekturschritt ausgeführt werden soll. Hierbei gibt es sieben Entscheidungsmöglichkeiten, die den Farben Rot R, Violett V, Blau B, Zyan C, Grün G und Gelb Y, sowie keine Änderung (Mitte 0 des Farbkreises) entsprechen.

Die Entscheidung, in welcher "Farbrichtung" der nächste Korrekturschritt ausgeführt werden soll, wird mit Hilfe eines Algorithmus gefällt, der mit einem Microkontroller ausgeführt werden kann.

Der Algorithmus verwendet als Variablen positive 8-bit Zahlen (Typ I), positive 16-bit Zahlen (Typ II) und 16-bit Zahlen mit positiven und negativem Vorzeichen (Typ III). Jeweils vor Start des Algorithmus müssen die aktuellen Ist-Werte der Helligkeiten $X_R$, $X_G$ und $X_B$ der einzelnen Farbkanäle R, G, B vorliegen, die von der Photodiode 3 ermitteln wurden. Außerdem ist für die Helligkeit der Farbkanäle R, G, B jeweils ein Sollwert $Y_R$, $Y_G$, und $Y_B$, sowie eine Fehlersummenschwelle $Z_{max}$ vorgegeben. Die Fehlersummenschwelle $Z_{max}$ ist der maximal mögliche Wert der Fehlersumme Z, die die Summe der Differenzen aus Ist-Wert und Soll-Wert der Helligkeiten der einzelnen Farbkanäle R, G, B darstellt:

$$Z_{max} = Max[Z] = Max[(Y_R - X_R) + (Y_G - X_G) + (Y_B - X_B)].$$

Weiterhin liegt vor dem Start des Algorithmus die Information über das aktuelle Tastverhältnis $A_R$, $A_G$ und $A_B$ der einzelnen Farbkanäle R, G, B vor.

Der Algorithmus läuft in den Schritten a) bis j) ab, deren Ablauf in Figur 2b mit beispielhaften Zahlen schematisch dargestellt ist und der im Folgenden erläutert wird:

a) Normieren der Ist-Werte der Helligkeit $X_R$, $X_G$ und $X_B$ jedes Farbkanals R, G, B auf eine Variable von Typ I.

b) Multiplizieren der normierten Ist-Werte der Helligkeit jedes Farbkanals R, G, B aus Schritt a) mit dem jeweiligen Wert des aktuellen Tastverhältnisses $A_R$, $A_G$ und $A_B$. Das Ergebnis ist eine Variable vom Typ II pro Farbkanal R, G, B, die ein Maß für die Farbanteile ist, die jeder Farbkanal R, G, an der Farbe des Mischlichtes hat.

c) Normieren der Werte aus b) auf eine Variable vom Typ I.

d) Ermitteln der Differenz des Soll-Wertes der Helligkeit $Y_R$, $Y_G$, und $Y_B$ jedes Farbkanals R, G, B und den Werten aus Schritt c) für jeden Farbkanal R, G, B. Das Ergebnis ist der aktuelle Farbfehlerwert pro Farbkanal R, G, B, der jeweils eine Variable vom Typ III ist.

e) Ermitteln der aktuellen Fehlersumme Z durch Summieren der Differenz-Beträge aus Schritt d). Das Ergebnis ist eine Variable vom Typ II.

f) Ermitteln des Wertes aus Schritt d) mit einem negativen Vorzeichen, der den größten Betrag hat. Gibt es keinen negativen Wert, ist das Ergebnis von Schritt f) gleich Null. Das Ergebnis ist eine Variable vom Typ III.

g) Addieren des Wertes aus Schritt f) zu jedem der drei Ergebnisse aus Schritt d). Durch diesen Schritt werden alle Farbfehlerwerte aus Schritt d) als positive Zahlen vom Typ II ausgegeben, wobei ihr Verhältnis zueinander gleich bleibt.

h) Ermitteln des Farbkanals R, G oder B mit dem größtem Farbfehlerwert aus Schritt g. Ergebnis ist ein Variable von Typ I.

i) Prüfen ob einer der anderen Farbkanäle Rot R, Grün G und Blau B einen ebenso großen Farbfehlerwert Z nach Schritt g) aufweist und deshalb genauso stark korrigiert werden muss, wie der Farbkanal, der in Schritt h) ermittelt wurde. Wenn dies der Fall ist, muss der Korrekturschritt in Richtung einer der Mischfarben Gelb Y, Zyan C oder Violett V ausgeführt werden. Sind alle Werte aus Schritt g) gleich groß, wird keine Korrektur durchgeführt.

j) Falls die aktuelle Fehlersumme Z aus Schritt e) kleiner ist als der vorgegebene maximale Wert $Z_{max}$ wird ebenfalls keine Korrektur durchgeführt. Mit Hilfe dieser Schwellwertbedingung wird ein Toleranzbereich innerhalb der CIE-Normfarbtafel vorgegeben, in dem sich der Farbort befinden soll. Befindet sich der Farbort innerhalb dieses Toleranzbereiches wird keine Regelung durchgeführt. Befindet sich der Farbort außerhalb des Toleranzbereiches reagiert die Regelung und führt entsprechende Korrekturschritte aus.

Es sei an dieser Stelle darauf hingewiesen, dass das erfindungsgemäße Verfahren selbstverständlich nicht nur mit Hilfe dieses Algorithmus durchgeführt werden kann, sondern beispielsweise auch mit einem ähnlichen Algorithmus, der einen PID-Regler beinhaltet. Ein solcher Algorithmus bietet in der Regel den Vorteil, das er geringe Rechenzeiten erlaubt. Ein PID-Regler ist dem Fachmann bekannt und wird daher an dieser Stelle nicht näher erläutert.

Jeder Farbkanal R, G, B wird mit einem pulsweitenmodulierten elektrischen Signal angesteuert und besitzt eine Helligkeit entsprechend dem diskretes Tastverhältnis dieses pulsweitenmodulierten Signals. Es wird ein minimal mögliches Tastverhältnis und ein maximal mögliches Tastverhältnis definiert, das nicht unter- beziehungsweise überschritten werden kann. Legt der nächste Korrekturschritt beispielsweise eine Erhöhung des Tastverhältnisses für die Farbe Rot fest, und diese befindet sich bereits im voll ausgesteuerten Zustand, müssen die übrigen zwei Farben in ihrem Tastverhältnis herabgesetzt werden, um so die Farbe Rot relativ zu den anderen Farben zu verstärken.

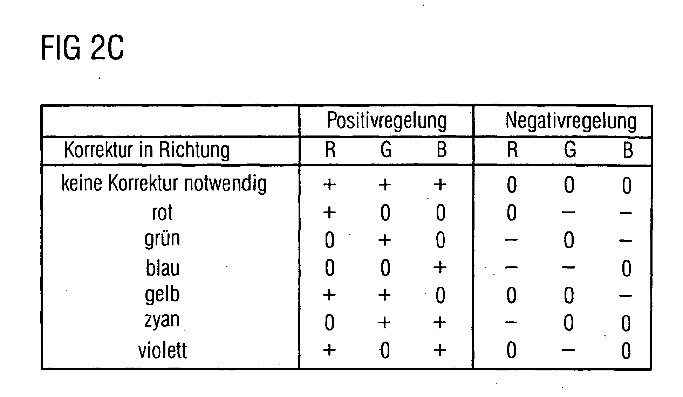

Ist keine Korrektur notwendig, wird zuerst versucht, die Helligkeiten aller Farbkanäle im gleichen Verhältnis heraufzusetzen (Positivregelung), bis das maximale Tastverhältnis mindestens eines Farbkanals R, G, B erreicht ist (vergleiche Figur 2c). Ist dieser Zustand erreicht, werden keinerlei Veränderungen mehr vorgenommen (Negativregelung).

Ist ein Korrekturschritt in Richtung einer der Primärfarben Rot, Grün oder Blau notwendig, wird zuerst versucht, die Helligkeit dieses Farbkanals R, G, B zu erhöhen (Positivregelung). Entspricht dessen Tastverhältnis bereits dem maximal möglichen Wert, wird die Helligkeit der beiden anderen Farbkanäle reduziert (Negativregelung). Für den Fall, dass ein Korrekturschritt in Richtung einer der Mischfarben Violett V, Zyan C oder Gelb Y erforderlich ist, wird zuerst versucht, die Helligkeit der Farbkanäle R, G, B zu erhöhen, die diese Farbe bilden (Positivregelung). Falls dies nicht möglich ist, da das Tastverhältnis eines dieser beiden Farbkanäle R, G, B bereits dem maximal möglichen Wert entspricht, wird die Helligkeit des anderen Farbkanals R, G, B reduziert (Negativregelung).

Dieses Verfahren hat den Vorteil, dass sich die Regelung zu jeder Zeit an dem Farbkanal R, G, B orientiert, der die Helligkeit begrenzt. Da gemäß dem Korrekturschema (Figuren 2a und 2c) zuerst versucht wird, einen notwendigen Korrekturschritt mit Positivregelung durchzuführen, wird keine Helligkeit "verschenkt", um den angestrebten Farbton zu erreichen. Zudem wird immer ein Farbkanal R, G, B mit dem maximal möglichen Tastverhältnis angesteuert.

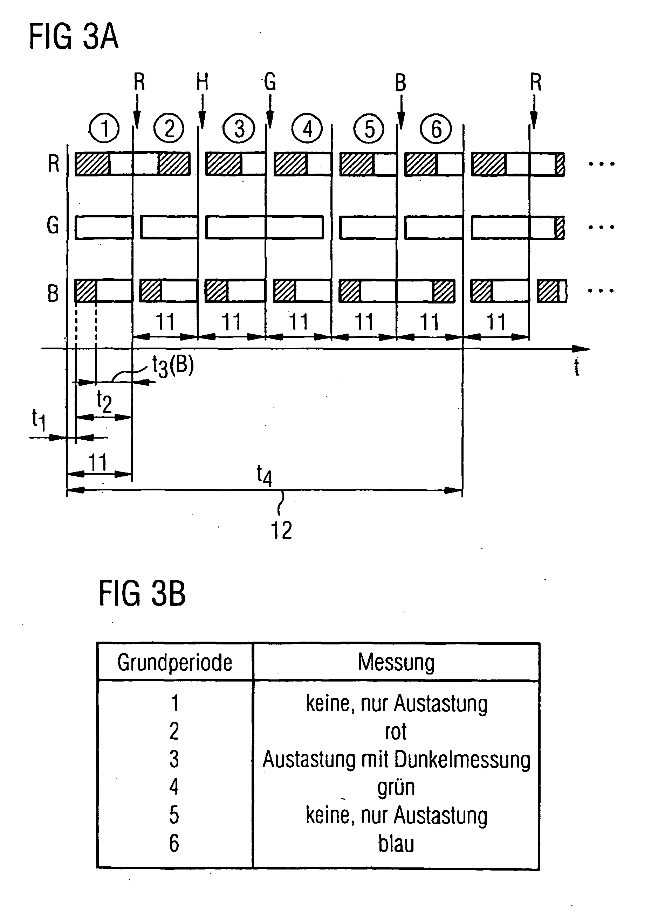

Das Ausführungsbeispiel gemäß Figur 3a zeigt ein Diagramm modifizierter pulsweitenmodulierter elektrischer Signale zur Steuerung jeweils eines roten R, eines grünen G und eines blauen B Farbkanals übereinander, die die Messwertaufnahme zur Regelung ermöglichen.

Die drei pulsweitenmodulierten Signale setzten sich aus Grundperioden 11 gleicher Länge zusammen und laufen ohne zeitliche Versetzung zueinander ab.

Eine Grundperiode 11 teilt sich in ein Zeitintervall der Länge $t_1$ und einen Zeitintervall der Länge $t_2$ auf. Das Zeitintervalls $t_1$ ist dafür vorgesehen, Messungen mit der Sensoreinrichtung 3 durchzuführen. Das Zeitintervall $t_1$ kann beispielsweise einige Mikrosekunden bis zu einer halben Millisekunde betragen. Das Zeitintervall $t_2$ repräsentiert den Zeitraum resultierend aus dem vorgegebenen maximalen Tastverhältnis, innerhalb dessen die Farbkanäle R, G, B angeschaltet sein können. Die tatsächliche Dauer $t_3$, die der jeweilige Farbkanal R, G, B angeschaltet ist, ermittelt sich nach dem jeweiligen aktuellen Tastverhältnis vorgegeben durch die Auswerte- und Regeleinrichtung 4.

Zur Messung der Helligkeit eines Farbkanals R, G, B befindet sich das Zeitintervall $t_3$, in dem der entsprechende Farbkanal R, G, B angeschaltet ist, zu Beginn der Grundperiode 11, während die übrigen Farbkanäle R, G, B zum Schluss der Grundperiode 11 mit einer Dauer $t_3$ entsprechend des jeweilige Tastverhältnisses leuchten. Eine Messung der Helligkeit eines Farbkanals R, G, B kann so zu Beginn der Grundperiode 11 in dem Zeitraum $t_1$ durchgeführt werden.

Zur Messung der Hintergrundhelligkeit befinden sich alle Zeitintervalle $t_3$ zum Schluss der Grundperiode 11. Wird nun eine Messung der Helligkeiten im Zeitraum $t_1$ zu Beginn der Grundperiode durchgeführt, kann die Hintergrundhelligkeit detektiert werden.

Eine Gesamtperiode 12 der modifizierten pulsweiten modulierten Signale in Figur 3a setzt sich aus sechs aufeinanderfolgende Grundperioden zusammen. Während der ersten Grundperiode 11 findet keine Messung statt, wobei in der zweiten Grundperiode 11 die Helligkeit des roten Farbkanals R ermitteln wird. Die Hintergrundhelligkeit wird während der dritten Grundperiode 11 ermitteln, auf die eine Grundperiode 11 folgt, innerhalb deren der Helligkeitswert des grünen Farbkanals G folgt. In der fünften Grundperiode 11 findet wiederum keine Messung statt auf die eine Grundperiode 11 folgt, innerhalb deren der Helligkeitswert des blauen Farbkanals B ermitteln wird (vergleiche hierzu auch Figur 3b).

Die Gesamtperiode 12 besitzt eine Dauer $t_4$, die sich aus der Dauer der einzelnen Grundperioden 11 zusammensetzt. Liegt diese Dauer $t_4$ unterhalb 0,01 Sekunden, sind die An- und Abschaltvorgänge der Farbkanäle so schnell, dass das menschliche Auge in der Regel kein Flimmern wahrnehmen kann.

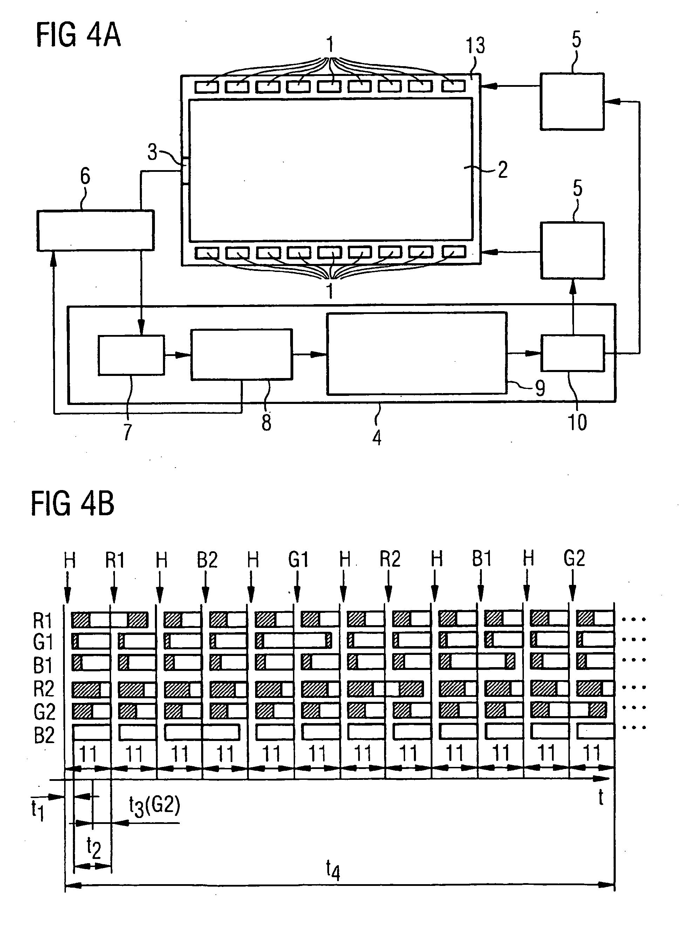

Im Unterschied zu dem Ausführungsbeispiel gemäß den Figuren 1a und 1b werden in dem Ausführungsbeispiel gemäß Figur 4a die beiden Reihen mit RGB-LEDs 1 unabhängig voneinander angesteuert und geregelt. Das rote, grüne und blaue Licht der RGB-LEDs 1 bildet pro Reihe jeweils einen roten R1, R2, einen grünen G1, G2 und einen blauen Farbkanal B1, B2, so dass insgesamt sechs Farbkanäle R1, R2, G1, G2, B1, B2 entstehen, die jeweils mit einem modifizierten pulsweitenmodulierten elektrischen Signal angesteuert werden.

Zur Ansteuerung der RGB-LEDs 1 ist pro Reihe eine Treibereinrichtung 5 nötig, so dass im Unterschied zu dem Ausführungsbeispiel gemäß Figur 1a eine weitere Treibereinrichtung 5 benötigt wird.

Die Messung der Helligkeit der einzelnen Farbkanäle R1, R2, G1, G2, B1, B2 kann weiterhin mit einem einzigen Lichtsensor 3, wie beispielsweise einer Fotodiode erfolgen. Diese ist wiederum beispielsweise seitlich des Lichtleiters 2 angeordnet.

Bei dem Ausführungsbeispiel gemäß Figur 4b werden sechs modifizierte pulsweitenmodulierte elektrische Signale zur Steuerung von sechs Farbkanäle R1, G1, B1, R2, G2 und B2 benötigt, die die Aufnahme der Messwerte erlaubt, die erforderlich sind, wenn sechs Farbkanäle Farbkanäle R1, R2, G1, G2, B1, B2 angesteuert und geregelt werden sollen.

Wie bei dem Ausführungsbeispiel gemäß Figur 3a sind die Grundperioden 11 aller pulsweitenmodulierten Signale gleich lang und zeitlich nicht versetzt. Sie setzen sich wiederum aus den Zeitintervallen $t_1$ und $t_2$ zusammen. Das Zeitintervall $t_2$ gibt wiederum das maximal mögliche Tastverhältnis an, und $t_1$ stellt den Zeitbereich dar, in dem eine Messung der Hintergrundhelligkeit oder der Helligkeit eines Farbkanals R1, R2, G1, G2, B1, B2 durchgeführt werden kann. Das Zeitintervall $t_1$ befindet sich zu Beginn der Grundperiode 11 und $t_2$ schließt sich hieran an. Die schwarzen Bereiche innerhalb des Zeitintervalls $t_2$ kennzeichnen ebenfalls den Zeitbereich $t_3$, während dem der jeweilige Farbkanal R1, R2, G1, G2, B1, B2 angeschaltet ist.

Zur Messung der Helligkeit eines Farbkanals R1, R2, G1, G2, B1, B2 wird wie in dem Ausführungsbeispiel gemäß Figur 3a das Zeitintervall $t_3$ innerhalb einer Grundperiode 11 in den Bereich $t_1$ verschoben. Diese Grundperioden 11 wechseln sich mit Grundperioden 11 ab, bei denen innerhalb des Zeitintervalls $t_1$ kein Farbkanal R1, R2, G1, G2, B1, B2 angeschaltet ist. Es ergibt sich so eine Gesamtperiode 12, die zwölf Grundperioden 11 enthält.

Entsprechend der oben aufgeführten Erweiterung von drei Farbkanäle R, G, B auf sechs Farbkanäle R1, R2, G1, G2, B1, B2, können modifizierte pulsweitenmodulierte Signale auch für die Regelung einer beliebig anderen Anzahl von Farbkanälen zusammengestellt werden.

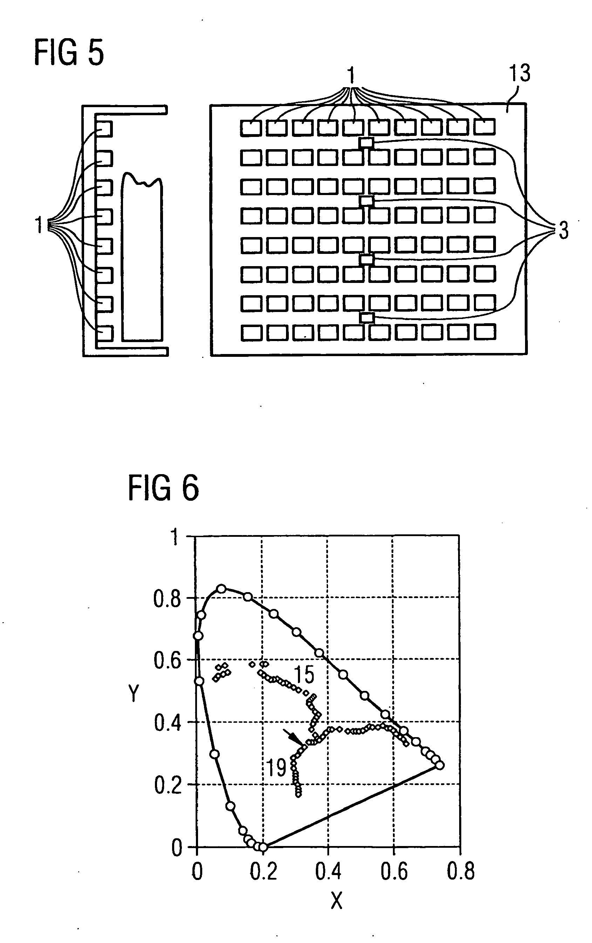

Zur flächigen Hinterleuchtung eines Displays ist es auch möglich, die primären Lichtquellen 1 nicht nur seitlich vom Lichtleiter 2 zu positionieren, sondern die gesamte Fläche hinter dem Lichtleiter 2 mit mehreren Reihen primärer Lichtquellen 1 zu bestücken (vergleiche Figur 5). In diesem Fall können die Helligkeitswerte der verschiedenen Farbkanäle auch mit mehreren Sensoreinrichtungen 3 ermitteln werden, die beispielsweise zwischen den Reihen der primären Strahlungsquellen 1 angeordnet sind. Die Regelung könnte in diesem Fall weiterhin mit einem einzigen Mikrokontroller 4 erfolgen. Das synchronisierte modifizierte pulsweitenmodulierte Regelverfahren ist somit beliebig erweiterbar.

Mit Hilfe des Regelverfahren ist es möglich, die Ist-Werte des Farbortes von mischfarbigen Licht in farbigen Bereichen der CIE-Normfarbtafel zu einem vorgegebenen Soll-Wert im weißen Bereich der CIE-Normfarbtafel innerhalb einiger Sekunden zu verschieben (vergleiche Figur 6).

Als primäre Lichtquellen 1 eignen sich nicht nur RGB-LEDs, sondern alle farbigen Lichtquellen, deren Helligkeiten sich mit Hilfe von pulsweitenmodulierten elektrischen Signalen variieren lassen. Insbesondere können alternativ zu Halbleiter-LEDs, organische LEDs, Elektroluminszenzfolien oder Laser als primäre Strahlungsquellen 1 verwendet werden.

## Patentansprüche

1. Verfahren zur Regelung einer Beleuchtungseinrichtung, die mischfarbiges Licht aussendet, das Licht mindestens zweier verschiedener Farbkanäle (R, R1, G, G1, B, B1) enthält, bei dem jeder Farbkanal (R, R1, G, G1, B, B1) mit einem pulsweitenmodulierten elektrischen Signalen mit einer Abfolge von Grundperioden (11) angesteuert wird, wobei

   - sich die Grundperioden (11) in ein Zeitintervall der Länge $t_1$ und in ein Zeitintervall der Länge $t_2$ aufteilen,
   - die Grundperioden (11) eines pulsweitenmodulierten elektrischen Signals jeweils so modifiziert sind, dass modifizierte Grundperioden (11) entstehen, die das Zeitintervall der Länge $t_1$ enthalten, während dem nur einer der mindestens zwei verschiedenen Farbkanäle (R, R1, G, G1, B, B1)angeschaltet ist und jeweils die Helligkeit des angeschalteten Farbkanals separat ermittelt wird,
   - die modifizierten Grundperioden (11) und weitere Grundperioden (11) aufeinanderfolgen und eine Gesamtperiode (12) bilden, die sich wiederholt, und
   - nach Ablauf der Gesamtperiode (12) das Verhältnis der Helligkeiten von einzelnen Farbkanälen (R, R1, G, G1, B, B1) der mindestens zwei verschiedenen Farbkanäle verglichen wird und die Tastverhältnisse der jeweiligen modifizierten pulsweitenmodulierten elektrischen Signale so eingestellt werden, dass der Farbort des mischfarbigen Lichtes innerhalb eines vorgegeben Bereiches der CIE-Normfarbtafel liegt, wobei
   - die Gesamtperiode (12) mindestens eine der weiteren Grundperioden (11) enthält, die so modifiziert ist, dass innerhalb des Zeitintervalls der Länge $t_1$ der weiteren Grundperiode (11) kein Farbkanal (R, R1, G, G1, B, B1) angeschaltet ist und der Helligkeitswert des Hintergrundlichtes innerhalb dieses Zeitintervalls der Länge $t_1$ ermittelt wird,
   - die weiteren Grundperioden (11) ein weiteres zeitintervall enthalten, das von dem Zeitintervall der Länge $t_2$ umfasst ist und während dem alle Farbkanäle (R, R1, G, G1, B, B1) gleichzeitig angeschaltet sind,
   - die Helligkeitswerte der Farbkanäle (R, R1, G, G1, B, B1) hinsichtlich des Helligkeitswerts des Hintergrundlichtes angepasst werden,
   - in den modifizierten Grundperioden (11) und in den weiteren Grundperioden (11) einer der Farbkanäle (R, R1, G, G1, B, B1) mit einem vorgegebenen maximalen Tastverhältnis angesteuert wird,
   - eine Zeitspanne des maximalen Tastverhältnisses, während der einer der Farbkanäle angesteuert ist, die Länge $t_2$ aufweist und die Zeitspanne der Länge $t_2$ den Zeitraum repräsentiert, der aus dem vorgegebenen maximalen Tastverhältnis resultiert, innerhalb dessen die Farbkanäle (R, R1, G, G1, B, B1) angeschaltet sein können, und
   - eine tatsächliche Dauer $t_3$, mit der die verbleibenden Farbkanäle (R, R1, G, G1, B, B1) angeschaltet sind, sich nach dem jeweiligen aktuellen Tastverhältnis, vorgegeben durch eine Auswerte- und Regeleinrichtung (4), ermittelt.

2. Verfahren nach Anspruch 1, wobei zur Bestimmung der Helligkeit eines Farbkanals (R, R1, G, G1, B, B1) mehrere Messwerte aufgenommen und gemittelt werden.

3. Verfahren nach Anspruch 1 oder 2, wobei zur Bestimmung des Helligkeitswertes des Hintergrundlichtes mehrere Messwerte aufgenommen und gemittelt werden.

**4.** Verfahren nach einem der Ansprüche 1 bis 3, wobei das Zeitintervall der Länge $t_1$ innerhalb der Grundperiode (11), in dem die Helligkeit eines Farbkanals (R, R1, G, G1, B, B1) ermittelt wird, kleiner ist als das Zeitintervall innerhalb dem der jeweilige Farbkanal (R, R1, G, G1, B, B1) angeschaltet ist.

**5.** Verfahren nach einem der Ansprüche 1 bis 4, wobei das Zeitintervall der Länge $t_1$ innerhalb der weiteren Grundperiode (11), in dem die Hintergrundhelligkeit ermitteln wird, kleiner ist als das Zeitintervall innerhalb dem ein Farbkanal(R, R1, G, G1, B, B1) angeschaltet ist.

**6.** Verfahren nach einem der Ansprüche 1 bis 5, wobei die Dauer einer Gesamtperiode (12) kleiner als 0.01 Sekunden ist.

**7.** Verfahren nach einem der Ansprüche 1 bis 6, wobei sich innerhalb der Gesamtperiode (11) mehrere Grundperioden (12), innerhalb denen die Helligkeiten der Farbkanäle (R, R1, G, G1, B, B1) ermitteln werden mit solchen abwechseln, innerhalb denen der Helligkeitswert des Hintergrundlichtes ermitteln wird.

**8.** Verfahren nach einem der Ansprüche 1 bis 7, wobei während der weiteren Grundperioden (11) die Farbkanäle (R, R1, G, G1, B, B1) am Ende der weiteren Grundperiode (11) angeschaltet sind, und wobei während der modifizierten Grundperioden (11) genau einer der Farbkanäle (R, R1, G, G1, B, B1) am Beginn der modifizierten Grundperiode (11) und der mindestens eine verbleibende Farbkanal (R, R1, G, G1, B, B1) am Ende der modifizierten Grundperiode (11) angeschaltet ist.

**Claims**

**1.** Method for controlling an illumination device which emits mixed-colour light containing light of at least two different colour channels (R, R1, G, G1, B, B1), in which each colour channel (R, R1, G, G1, B, B1) is driven with a pulse-width-modulated electrical signal with a sequence of basic periods (11), wherein

- the basic periods (11) are split into a time interval of length $t_1$ and into a time interval of length $t_2$,
- the basic periods (11) of a pulse-width-modulated electrical signal are in each case modified such that modified basic periods (11) are produced which contain the time interval of length $t_1$, during which only one of the at least two different colour channels (R, R1, G, G1, B, B1) is turned on and in each case the brightness of the turned-on colour channel is ascertained separately,
- the modified basic periods (11) and further basic periods (11) succeed one another and form an overall period (12), which is repeated, and
- after the overall period (12) has elapsed, the ratio of the brightnesses of individual colour channels (R, R1, G, G1, B, B1) from the at least two different colour channels is compared and the duty ratios of the respective modified pulse-width-modulated electrical signals are set such that the colour locus of the mixed-colour light lies within a prescribed region of the CIE standard chromaticity diagram, wherein
- the overall period (12) contains at least one of the further basic periods (11), which is modified such that no colour channel (R, R1, G, G1, B, B1) is turned on within the time interval of length $t_1$ of the further basic period (11) and the brightness value of the background light is ascertained within said time interval of length $t_1$,
- the further basic periods (11) contain a further time interval, which is covered by the time interval of length $t_2$ and during which all colour channels (R, R1, G, G1, B, B1) are turned on simultaneously,
- the brightness values of the colour channels (R, R1, G, G1, B, B1) are adapted with regard to the brightness value of the background light,
- in the modified basic periods (11) and in the further basic periods (11) one of the colour channels (R, R1, G, G1, B, B1) is driven with a prescribed maximum duty ratio,
- a time period from the maximum duty ratio during which one of the colour channels is turned on has the length $t_2$, and the time period of length $t_2$ represents the period of time which results from the prescribed maximum duty ratio within which the colour channels (R, R1, G, G1, B, B1) can be turned on, and
- an actual time $t_3$ during which the remaining colour channels (R, R1, G, G1, B, B1) are turned on is ascertained on the basis of the respective current duty ratio, prescribed by an evaluation and control device (4).

**2.** Method according to Claim 1, wherein a plurality of measured values are recorded and averaged for the purpose of determining the brightness of a colour channel (R, R1, G, G1, B, B1).

**3.** Method according to Claim 1 or 2, wherein a plurality of measured values are recorded and averaged for the purpose of determining the brightness value of the background light.

**4.** Method according to one of Claims 1 to 3, wherein the time interval of length $t_1$ within the basic period (11) in which the brightness of a colour channel (R, R1, G, G1, B, B1) is ascertained is less than the time interval within which the respective colour channel (R, R1, G, G1, B, B1) is turned on.

**5.** Method according to one of Claims 1 to 4, wherein the time interval of length $t_1$ within the further basic period (11) in which the background brightness is ascertained is less than the time interval within which a colour channel (R, R1, G, G1, B, B1) is turned on.

**6.** Method according to one of Claims 1 to 5, wherein the duration of an overall period (12) is less than 0.01 second.

**7.** Method according to one of Claims 1 to 6, wherein, within the overall period (12), a plurality of basic periods (11) within which the brightnesses of the colour channels (R, R1, G, G1, B, B1) are ascertained alternate with those within which the brightness value of the background light is ascertained.

**8.** Method according to one of Claims 1 to 7, wherein, during the further basic periods (11), the colour channels (R, R1, G, G1, B, B1) are turned on at the end of the further basic period (11), and wherein, during the modified basic periods (11), precisely one of the colour channels (R, R1, G, G1, B, B1) is turned on at the start of the modified basic period (11) and the at least one remaining colour channel (R, R1, G, G1, B, B1) is turned on at the end of the modified basic period (11).

**Revendications**

**1.** Procédé de régulation d'un dispositif d'éclairage qui émet de la lumière aux couleurs mélangées contenant de la lumière d'au moins deux canaux de couleur différents (R, R1, G, G1, B, B1), selon lequel chaque canal de couleur (R, R1, G, G1, B, B1) est commandé avec un signal électrique modulé en largeur d'impulsion possédant une séquence de périodes fondamentales (11),

- les périodes fondamentales (11) se divisant en un intervalle de temps de longueur $t_1$ et en un intervalle de temps de longueur $t_2$,
- les périodes fondamentales (11) d'un signal électrique modulé en largeur d'impulsion étant à chaque fois modifiées de telle sorte qu'il se produit des périodes fondamentales (11) modifiées qui contiennent l'intervalle de temps de longueur $t_1$, pendant lequel seul l'un des au moins deux canaux de couleur différents (R, R1, G, G1, B, B1) est connecté, et la luminosité du canal de couleur connecté étant à chaque fois déterminée séparément,
- les périodes fondamentales (11) modifiées et les autres périodes fondamentales (11) se succédant et formant une période totale (12) qui se répète et
- après écoulement de la période totale (12), le rapport des luminosités des canaux de couleur (R, R1, G, G1, B, B1) individuels des au moins deux canaux de couleur différents étant comparé et les rapports cycliques des signaux électriques modulés en largeur d'impulsion à chaque fois modifiés étant réglés de telle sorte que la localisation chromatique de la lumière aux couleurs mélangées se trouve à l'intérieur d'une zone prédéfinie du diagramme de chromaticité CIE,
- la période totale (12) contenant au moins l'une des autres périodes fondamentales (11) qui est modifiée de telle sorte qu'à l'intérieur de l'intervalle de temps de longueur $t_1$ de l'autre période fondamentale (11), aucun canal de couleur (R, R1, G, G1, B, B1) n'est connecté, et la valeur de la luminosité de la lumière d'arrière-plan à l'intérieur de cet intervalle de temps de longueur $t_1$ étant déterminée,
- les autres périodes fondamentales (11) contenant un autre intervalle de temps qui est inclus dans l'intervalle de temps de longueur $t_2$ et pendant lequel tous les autres canaux de couleur (R, R1, G, G1, B, B1) sont connectés simultanément,
- les valeurs de luminosité des canaux de couleur (R, R1, G, G1, B, B1) étant adaptés du point de vue de la valeur de la luminosité de la lumière d'arrière-plan,
- dans les périodes fondamentales (11) modifiées et dans les autres périodes fondamentales (11), l'un des canaux de couleur (R, R1, G, G1, B, B1) étant commandé avec un rapport cyclique maximum prédéfini,
- un intervalle de temps du rapport cyclique maximum, pendant lequel l'un des canaux de couleur est commandé, présentant la longueur $t_2$ et l'intervalle de temps de longueur $t_2$ représentant la période qui résulte du rapport cyclique maximum prédéfini à l'intérieur duquel les canaux de couleur (R, R1, G, G1, B, B1) peuvent être connectés, et
- une durée effective $t_3$, avec laquelle les canaux de couleur (R, R1, G, G1, B, B1) restants sont connectés, étant déterminée d'après le rapport cyclique actuel respectif, prédéfini par un dispositif d'interprétation et de régulation (4).

2. Procédé selon la revendication 1, selon lequel plusieurs valeurs mesurées sont enregistrées et leur moyenne calculée en vue de déterminer la luminosité d'un canal de couleur (R, R1, G, G1, B, B1).

3. Procédé selon la revendication 1 ou 2, selon lequel plusieurs valeurs mesurées sont enregistrées et leur moyenne calculée en vue de déterminer la valeur de la luminosité de la lumière d'arrière-plan.

4. Procédé selon l'une des revendications 1 à 3, selon lequel l'intervalle de temps de longueur $t_1$ à l'intérieur de la période fondamentale (11), dans laquelle est déterminée la luminosité d'un canal de couleur (R, R1, G, G1, B, B1), est inférieur à l'intervalle de temps à l'intérieur duquel le canal de couleur (R, R1, G, G1, B, B1) correspondant est connecté.

5. Procédé selon l'une des revendications 1 à 4, selon lequel l'intervalle de temps de longueur $t_1$ à l'intérieur de l'autre période fondamentale (11), dans laquelle est déterminée la luminosité d'arrière-plan, est inférieur à l'intervalle de temps à l'intérieur duquel un canal de couleur (R, R1, G, G1, B, B1) est connecté.

6. Procédé selon l'une des revendications 1 à 5, selon lequel la durée d'une période totale (12) est inférieure à 0,01 seconde.

7. Procédé selon l'une des revendications 1 à 6, selon lequel, à l'intérieur de la période totale (12), plusieurs périodes fondamentales (11), à l'intérieur desquelles sont déterminées les luminosités des canaux de couleur (R, R1, G, G1, B, B1), sont alternées avec celles à l'intérieur desquelles est déterminée la valeur de la luminosité de la lumière d'arrière-plan.

8. Procédé selon l'une des revendications 1 à 7, selon lequel, pendant les autres périodes fondamentales (11), les canaux de couleur (R, R1, G, G1, B, B1) sont connectés à la fin de l'autre période fondamentale (11), et selon lequel, pendant les périodes fondamentales (11) modifiées, exactement l'un des canaux de couleur (R, R1, G, G1, B, B1) est connecté au début de la période fondamentale (11) modifiée et l'au moins un canal de couleur (R, R1, G, G1, B, B1) restant est connecté à la fin de la période fondamentale (11) modifiée.

## FIG 1A

## FIG 1B

EP 1 643 227 B1

FIG 2A

FIG 2B

| | $Z_{max}$ | 30 |
|---|---|---|

| | $Y_R$ | 255 |
| | $Y_G$ | 160 |
| | $Y_B$ | 100 |

| | $A_R$ | 100 |
| | $A_G$ | 90 |
| | $A_B$ | 80 |

| | $X_R$ | 120 |
| | $X_G$ | 130 |
| | $X_B$ | 100 |

| | a | b | c | d | e | f | g | h | i | j |
|---|---|---|---|---|---|---|---|---|---|---|
| R | 235 | 23500 | 255 | 0 | 159 | -89 | 89 | 1 | 1 | 1 |
| G | 255 | 22950 | 249 | -89 | | | 0 | | | |
| B | 196 | 15680 | 170 | -70 | | | 19 | | | |

# FIG 2C

| Korrektur in Richtung | Positivregelung | | | Negativregelung | | |
|---|---|---|---|---|---|---|
| | R | G | B | R | G | B |
| keine Korrektur notwendig | + | + | + | 0 | 0 | 0 |
| rot | + | 0 | 0 | 0 | − | − |
| grün | 0 | + | 0 | − | 0 | − |
| blau | 0 | 0 | + | − | − | 0 |
| gelb | + | + | 0 | 0 | 0 | − |
| zyan | 0 | + | + | − | 0 | 0 |
| violett | + | 0 | + | 0 | − | 0 |

EP 1 643 227 B1

# FIG 3A

# FIG 3B

| Grundperiode | Messung |
|---|---|
| 1 | keine, nur Austastung |
| 2 | rot |
| 3 | Austastung mit Dunkelmessung |
| 4 | grün |
| 5 | keine, nur Austastung |
| 6 | blau |

## FIG 4A

## FIG 4B

## FIG 5

## FIG 6

**IN DER BESCHREIBUNG AUFGEFÜHRTE DOKUMENTE**

**In der Beschreibung aufgeführte Patentdokumente**

- WO 0247438 A2
- WO 02090909 A2
- US 6127783 A
- US 6320325 B1
- EP 1194013 A1